# EUROPEAN PATENT SPECIFICATION

(11) **EP 4 530 502 B1**
(45) Date of publication and mention of the grant of the patent: **22.07.2026**
(21) Application number: 24203023.7
(22) Date of filing: 26.09.2024
(51) Int. Cl.: F16H 61/10, F16H 61/16

(54) **METHOD FOR CONTROLLING A TRANSMISSION OF AN AGRICULTURAL VEHICLE AND AGRICULTURAL VEHICLE IMPLEMENTING THE METHOD**
VERFAHREN ZUR STEUERUNG EINES GETRIEBES EINES LANDWIRTSCHAFTLICHEN FAHRZEUGS UND LANDWIRTSCHAFTLICHES FAHRZEUG MIT IMPLEMENTIERUNG DES VERFAHRENS
PROCÉDÉ DE COMMANDE D'UNE TRANSMISSION D'UN VÉHICULE AGRICOLE ET VÉHICULE AGRICOLE METTANT EN OEUVRE LE PROCÉDÉ

(30) Priority: 26.09.2023 IT 202300019866
(43) Date of publication of application: 02.04.2025
(73) Proprietor: CNH Industrial Italia S.p.A., 10156 Torino (IT)
(72) Inventor: Dannerbauer, Harald, 10156 Turin (IT); Morandi, Gabriele, 10156 Turin (IT); Mescia, Claudio, 10156 Turin (IT); Venturini, Giorgio, 10156 Turin (IT)
(74) Representative: CNH Industrial IP Department

(56) References cited:
- US-A1- 2012 065 853
- US-A1- 2013 325 270
- US-A1- 2015 176 705
- US-A1- 2018 142 770

## Description

### Field of the invention

The present invention relates to the field of methods for controlling agricultural vehicle transmissions.

### State of the art

Examples of agricultural vehicle transmissions are given in US7828683 and EP1541898.

These transmissions are characterized by having high motion reduction ratios and the ability to change between gears with an imperceptible interruption in torque delivery. US2015/176705A describes a system and method for controlling a transmission for an agricultural vehicle capable of a hydrostatic mode and a hydro-mechanical mode.

US7828683 shows a so-called 2x1 transmission, i.e. two forward gear ratios and one reverse gear are implemented.

The transmission includes a hydrostat and a double planetary gear train. An internal combustion engine drives in rotation both a primary sun gear of the double planetary gear train and the hydrostat pump. The hydraulic motor of the hydrostat drives the crown of the double planetary gear train in rotation.

A gearbox allows to make operational a first port associated with the common carrier or a second port associated with a second sun gear.

The rotation speed of the hydraulic pump impacts the first gear and the second gear in the opposite way, in the sense that, in the first case, the speed of the output shaft is proportional to the rotation speed of the hydraulic motor and in the second case, the speed of the output shaft is inversely proportional to the rotation speed of the hydraulic motor.

EP1541898 shows a similar configuration, in which the output associated with the carrier supports three free gears 31, 32, 33. The output associated with the second solar supports two free gears 49 and 50.

The synchronizers S1 and S3 allow the free gears to be made fixed with the respective outputs of the double epicyclic gearing.

A double clutch allows the motion to be taken alternatively from a gear associated with the carrier and from a gear associated with the second sun gear. Also in this case, the speed of the transmission output shaft is proportional to the rotation speed of the hydraulic motor or inversely proportional to the rotation speed of the hydraulic motor, depending on whether the motion is taken from the satellite carrier or from the second sun.

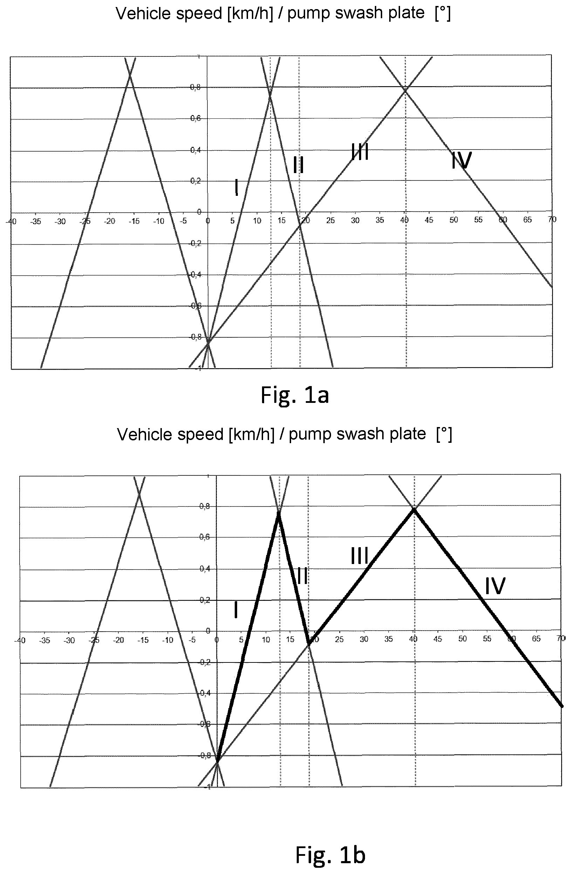

Fig. 1 shows a diagram of a 4X2 transmission, i.e. comprising four characteristic straight lines corresponding to the same number of forward gears, to the right of the ordinate axis, and two characteristic lines corresponding to two reverse gears, on the left of the y-axis.

The speed of the vehicle, i.e. the rotation speed of the transmission output shaft, is indicated on the x-axis, while the deflection angles of the hydrostat hydraulic pump swash plate are indicated on the ordinate axis.

The graph of Fig. 1a is plotted according to a predetermined rotation speed of the prime mover, generally a Diesel cycle thermal engine.

When the swash plate is at approximately -0.9 of inclination and the first gear is engaged, the vehicle is approximately stationary. By increasing the angle of the hydraulic pump swash plate, the speed of the vehicle increases moving along the first gear I. By continuing to accelerate the vehicle, the straight line of the first gear I, in the condition of angle approximately +0.75, intersects the straight line of the second gear II. Therefore, it is advantageous to change gear in this condition generally referred to as "speed matching".

By reducing the angle of the hydraulic pump plate, the vehicle speed continues to increase in second gear.

As the vehicle increases its relative speed, the angle of the hydraulic pump swash plate passes, for example, from -x° to +x° and, when the intersection point between the characteristic curve of the current gear and the upper one is reached, the plate moves from +x° to -x°. In other words, the angle of the swash plate turns out to be alternately
- Directly proportional and
- Inversely proportional
with the accelerator pedal inclination. This is equivalent to saying that upon reaching the intersection point, the proportionality factor between the inclination of the accelerator lever and the hydraulic pump swash plate changes sign between + and - (or vice versa).

With the plate at approximately -0.1 the diagram of the second gear II intersects the diagram of the third gear, therefore, in these conditions the gear change can be carried out almost instantaneously without any drop in driving torque.

The same concept is applicable to the intersection of the diagrams between third and fourth gear. The latter allows the vehicle to reach its maximum speed.

In figure 1b the same diagram is presented, highlighting the portions of the characteristic curves actually used.

The speed ratios are selected to maintain the combustion engine in conditions of maximum efficiency at least in the intermediate operating conditions of each gear and to maintain the operating pressures of the hydrostat within the design limits.

Fig. 2 shows a diagram of the efficiency of the agricultural vehicle propulsion system.

Vertical lines placed at 12.5 km/h, 18 km/h and 40 km/h are shown which correspond to the "speed matching" conditions reported in Figs. 1a and 1b.

It is immediately understood that the third gear has a lower efficiency than the second gear at the intersection point between the second and third gears. However, it is not possible to move the intersection point to the right, for example at 24 km/h, as this causes a discontinuity in the operation of the hydraulic pump swash plate and torque transmission.

In certain working conditions of the vehicle, it may happen that the tool connected to the PTO requires a predetermined rotation speed of the prime mover and a predetermined speed of the vehicle which falls approximately at the intersection of the characteristic line of the second with the characteristic line of the third gear.

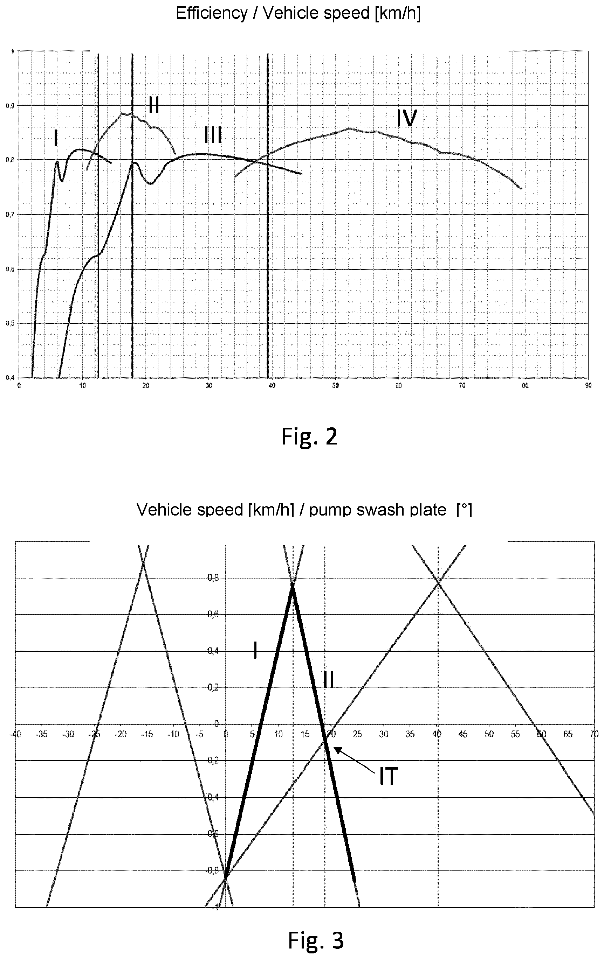

This determines continuous transitions between the second and third gear and also a lower efficiency of the propulsion system, since, as can be seen from the graph in Fig. 2, the efficiency of the third gear, at the aforementioned intersection, is lower than the second gear. Therefore, there is a risk not only of discomfort on board the vehicle but also of reduced efficiency of the vehicle's propulsion system.

### Summary of the invention

The aim of the present invention is to improve the behaviour of the propulsion system of an agricultural vehicle comprising a transmission equipped with a hydrostat slaved to an epicyclic gearing and a gearbox arranged to receive motion from one at a time between two outputs of the epicyclic gearing.

The basic idea of the present invention is to allow the operator to avoid gear change while the vehicle is in field condition. Furthermore, the hydraulic pump swash plate maintains the sign of proportionality with the accelerator lever unchanged, in the sense that the plate is allowed to exceed the angle of intersection with the characteristic straight line relating to the immediately higher gear. In other words, the swash plate is allowed to pass the speed matching point with the next higher gear.

Advantageously, the vehicle avoids continuous gear changes and above all operates with greater efficiency.

According to a preferred aspect of the present invention, normal operation of the vehicle is restored by selecting the "road" mode which is equivalent to deactivating the "field" mode.

This implies that upon a subsequent slowdown of the vehicle which brings the hydraulic pump swash plate to the speed matching point, the transmission naturally engages the immediately higher gear.

According to another preferred aspect of the present invention, normal operation of the vehicle is restored by selecting the "road" mode, however to immediately shift to a higher gear, without slowing down the vehicle, pressing the clutch pedal is required. In fact, according to this aspect of the invention, a vehicular processing unit interprets the operation of the clutch pedal as the authorization to open the clutch, disconnecting the transmission from the vehicular wheels and thus allowing
- the movement of the hydraulic pump swash plate in the conditions of synchronization with the upper gear,
- engaging the higher gear and
- the final closing of the clutch.

According to a preferred aspect of the invention, when the operator selects the "field" mode, which sets the on-board systems into working condition, a vehicular processing unit monitors the speed of the vehicle and when it oscillates approximately at the speed matching point, then automatically activates the field mode, inhibiting the engagement of the higher gear.

The dependent claims describe preferred variants of the invention.

### Brief description of the figures

Further objects and advantages of the present invention will be clear from the following detailed description of an example of its implementation (and its variants) and from the attached drawings given purely for explanatory and non-limiting purposes, in which:
Figs. 1a and 1b disclose examples of vehicle speed/angle diagrams of the hydraulic pump swash plate with the characteristic lines of the different gears according to the prior art; in particular, Fig. 1b shows the portions of the straight lines generally used throughout the forward speed range of the agricultural vehicle, according to the prior art;
Fig. 2 shows the vehicle speed/efficiency diagram of the propulsion system, highlighting the individual efficiencies throughout the adjustment range of the hydraulic pump swash plate, according to the prior art;
Fig. 3 discloses a diagram of the vehicle speeds/angle of the hydraulic pump swash plate according to Fig. 1, with the portions of the characteristic lines according to the present invention;

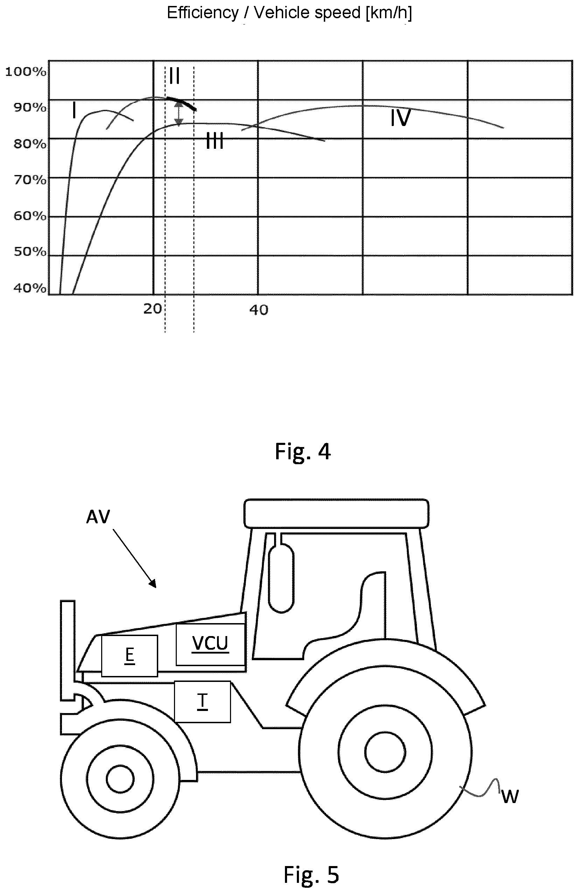

Fig. 4 shows the efficiencies diagram modified according to the diagram in Fig. 3;
Fig. 5 shows an agricultural vehicle implementing the present invention;

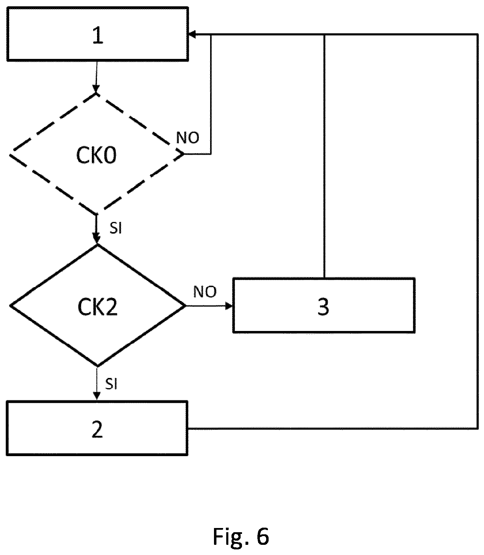

Fig. 6 shows an example of a flow diagram of a variant of the method of the present invention.

The same reference numbers and letters in the figures identify the same elements or components or functions.

It should also be noted that the terms "first", "second", "third", "superior", "inferior" and the like may be used here to distinguish various elements, so they are to be regarded as simple labels. These terms do not imply a spatial, sequential, or hierarchical order for the modified elements unless specifically indicated or inferred from the text.

The elements and characteristics illustrated in the different preferred embodiments, including the drawings, can be combined with each other as long as they are in accordance with the claims.

### Detailed description

From the comparison of Fig. 1b and Fig. 3, one immediately recognizes the fact that the hydraulic pump swash plate is controlled so as to exceed the intersection point IT, i.e. the speed matching point, between second gear II and third gear III, pushing the vehicle up to a speed of approximately 25 km/h.

In this example, evidently, the first and second gears belong to the so-called "field group", while the third gear and possibly the gears higher than the third gear belong to the so-called "road group".

In other words, with reference, for example, to the transmission shown in EP1541898, when the speed of the vehicle increases until it reaches the point of intersection between the characteristic line of the second gear and the characteristic line of the third gear,
- the synchronizer S3 maintains operative the gear wheel 50, which meshes with wheel 52,
- the double clutch gearbox A, B constantly maintains the current operating condition and
- a sign of proportionality between the inclination of the accelerator lever and the inclination of the hydraulic pump swash plate is maintained unchanged.

With reference to Fig. 4, the efficiency of the propulsion system which includes combustion engine E and transmission T, is optimized and at the same time the discomfort caused by continuous gear changes does not occur.

Fig. 5 shows an agricultural vehicle AV comprising a combustion engine E, a transmission T comprising
- A hydrostat comprising a variable displacement hydraulic pump operationally connected to a fixed or variable displacement hydraulic motor, wherein the hydraulic pump is operationally driven in rotation by the thermal engine, directly or indirectly, for example through a geared motor;
- An epicyclic gear train comprising
   + a first port operationally connected directly or indirectly to the combustion engine to receive the motion;
   + a second port operationally connected to the hydraulic motor of the hydrostat;
   + a third port arranged to rotate at least two toothed wheels defining as many first gears;
   + a fourth port arranged to rotate at least one toothed wheel defining at least a second gear, intermediate with respect to said first two gears;
   + means for switching a motion transmission between one of said first gears and said at least one second gear, including clutches, etc...

The transmission is configured so that, as the speed of the vehicle increases (or decreases), a switch between two consecutive gears, operationally connected to different ports of the epicyclic gearing determines a reversal of the variation of the angle of the hydraulic pump swash plate.

It is worth remembering that a higher gear means a gear which, under the same operating conditions of the combustion engine and configuration of the hydrostatic transmission, allows the vehicle to reach a higher speed than a respective lower gear.

It is worth remembering that two gears are consecutive in the sense that a speed matching point is defined between them as defined above.

Examples of transmissions described herein are shown in US7828683 and EP1541898 which here linked by referenced. According to a first aspect of the present invention, the transmission comprises consecutive gears operatively connected to different ports of the epicyclic gear train. This means that to change from second to third gear it is necessary to reach the speed matching point to be able to change gear, **i.e.** a predetermined point of intersection between the lines representing the corresponding transmission ratios as the angle of the hydraulic pump swash plate of the hydrostat varies.

According to a first variant of the present invention, there is a man/machine interface device in the vehicle cabin which allows the operator to select a so-called "field" mode which involves enabling only the field gears, **i.e.** those belonging to the "work group", thus preventing the transmission from shifting to higher gears.

For example, first and second gears can be considered field mode gears.

When, in field mode, the second gear is engaged, the engagement of the third gear is prevented, allowing the hydraulic pump swash plate to exceed the point of intersection with the third gear, i.e. the speed matching point. The consequence of this behaviour is that if in "road" mode the switching between second and third gear occurs at 15km/h, it is possible to remain in second gear up to 20km/h,

This behaviour is particularly favourable when it is necessary to guarantee continuity of driving torque during a process that requires a vehicle forward speed close to the speed corresponding to the aforementioned speed matching, avoiding continuous and harmful gear changes.

Therefore, in these conditions, an action by the operator on the accelerator pedal involves a variation of the angle of the plate throughout its operating range, without this causing any engagement of gears higher than those belonging to the "field" group.

Generally, the vehicle operates in accelerator-base mode, **i.e.** the accelerator controls the rotation speed of the engine and the hydraulic pump swash plate varies its angle accordingly, following, for example, a look up table. Evidently, a variation in the angle of the swash plate determines a proportional variation in the displacement of the hydraulic pump.

In field mode, only switching from the highest "field" gear of the group of field gears to the immediately higher gear is inhibited. Therefore, if the field gears include first to third gear, it is always possible to shift between these gears while remaining in field mode, but shifting from third to fourth gear is inhibited.

Therefore, when the angle of the swash plate corresponds to the intersection point with the characteristic line of the lower gear, then the engagement of the lower gear is allowed, in a known way, remaining in "field" mode. Subsequently, the engagement of a higher gear is permitted, as long as it belongs to the "field group".

According to another preferred variant of the invention, a processing unit VCU, arranged to monitor and control the on-board devices, is configured to monitor the operating conditions and to inhibit the gear shift towards a gear higher than a gear of the group field, near the speed matching point.

According to a preferred aspect of the invention, the deactivation of the field mode to allow you to engage the gear higher than the current one when it turns out that the plate is beyond the aforementioned intersection point corresponds to speed matching with the immediately higher gear, can be performed in two ways, both based on a preliminary interaction of the operator with the human/machine interface means:
- the accelerator pedal is released until the speed matching point is reached, allowing a gear change in a known way, or
- the clutch pedal is depressed for at least an instant; in this case the processing unit is configured to control in succession: the opening of the clutch, the variation of the angle of the swash plate until the synchronization of transmission with the immediately higher gear, engagement of the immediately higher gear and closing of the clutch.

The first solution allows to keep the transmission always connected to the combustion engine, while the second solution allows to obtain a quicker gear change.

Fig. 6 shows an example of a recursive flow diagram for implementing the method of the present invention:
- (Step 1) Acquisition of an operational state of the vehicle,
- (Ck1) Verification of an operational state of the vehicle, when it appears that the vehicle is in field condition, then, if positive
- (Ck2) checking whether the current gear is a higher gear of a predetermined group of field gears, then, if so
- (Step 2) Inhibition of engaging a gear higher than the current gear and maintaining unchanged a sign of a proportionality factor between an inclination of the accelerator lever and an inclination of a plate of the hydraulic pump beyond a first speed matching point with said higher gear.

When the first check is not positive: CK1 = NO it starts again from the beginning. While when the second check is not positive CK2 = NO, a third step (Step 3) is carried out to authorize the gear change towards the immediately higher gear and restarts from the beginning.

The present invention finds application in all those situations in which at least two forward gears are present. The present invention can advantageously be carried out by means of a computer program which includes coding means for carrying out the steps of the method, when this program is executed on a computer. It is therefore understood that the scope of protection extends to said computer program and further to computer readable means comprising a recorded message, said computer readable means comprising program coding means for carrying the steps of the method, when said program is run on a computer.

Constructive variations to the non-limiting example described are possible, without departing from the scope of protection of the claims.

From the above description, the person skilled in the art is able to realize the object of the invention without introducing further construction details.

## Claims

1. Method for controlling a transmission (T) of an agricultural vehicle, wherein the agricultural vehicle comprises a propulsion system comprising an internal combustion engine (E) operatively connected to the transmission (T), wherein the transmission comprises
- A hydrostat comprising a variable displacement hydraulic pump operatively connected to a fixed or variable displacement hydraulic motor, wherein the hydraulic pump is operatively driven in rotation by the internal combustion engine;
- An epicyclic gear system comprising at least a first port and a second output ports, wherein the first port is configured to drive in rotation two or more toothed wheels defining as many gears of a first group and wherein the second port is configured to drive in rotation of one or more toothed wheels defining as many gears of a second group, and wherein consecutive gears belong to different groups between said first and second groups;
- means for carrying out a gear change between two consecutive gears, including said hydraulic pump and/or at least one clutch;
- Processing means (VCU) configured to control the hydraulic pump and the switching means as a function of a position of an accelerator lever,
the method including in succession:
- (Step 1) Acquisition of an operational status of the vehicle,
- (Ck1) Verification of an operational state of the vehicle, whereby, when it returns that the vehicle is in field condition, the method is **characterized in** then
- (Ck2) checking if the current gear is a higher gear of a predetermined group of field gears, then, if so
- (Step 2) Inhibition of engaging a gear higher than the current gear and maintaining unchanged a sign of a proportionality factor between an inclination of the accelerator lever and an inclination of a swash plate of the hydraulic pump beyond a first speed matching point with said higher gear.

2. The method according to claim 1, further comprising a step of allowing the engagement of a lower gear by allowing a switching of the sign of the proportionality factor between the inclination of the accelerator lever and the inclination of the hydraulic pump swash plate over one second speed matching point with said lower gear.

3. Method according to claim 1 or 2, wherein when said verification (CK1) of the operational state of the vehicle, returns that the operational state is "roads, then, (Step 3) permitting the engagement of a higher gear and permitting the variation of the proportionality sign at the speed matching point.

4. Method according to any of the previous claims 1 - 3, further comprising a step of automatic deactivation of said "field" state of the vehicle indicating a field operating condition in response
- to a signal representative of said deactivation generated by a human-machine interface device and simultaneously
- to a signal representative of depression of a clutch pedal.

5. Method according to claim 4, wherein, as a consequence of said deactivation, the method comprises the following steps in succession:
- clutch opening,
- variation of the inclination of the swash plate up to the speed matching point with the gear immediately higher than the current gear,
- engaging the immediately higher gear and
- closing of the clutch.

6. Method according to any of the previous claims 1 - 5, wherein said operating state of the vehicle indicating the field condition is caused by a signal generated by a man/machine interface or generated by processing means as a consequence of the positive verification of the fact that the vehicle moves in a speed interval corresponding to an interval of inclinations of the swash plate including a speed matching point with a higher gear.

7. Vehicular processing means (VCU), for an agricultural vehicle (AV) comprising a propulsion system comprising an internal combustion engine (E) operatively connected to a transmission (T), wherein the transmission comprises
- A hydrostat comprising a variable displacement hydraulic pump operatively connected to a fixed or variable displacement hydraulic motor, wherein the hydraulic pump is operatively driven in rotation by the internal combustion engine;
- An epicyclic gear system comprising at least a first port and a second output port, wherein the first port is configured to drive in rotation two or more toothed wheels defining as many gears of a first group and wherein the second port is configured to drive in rotation of one or more toothed wheels defining as many gears of a second group, and wherein consecutive gears belong to different groups between said first and second groups;
- means for carrying out a gear change between two consecutive gears, including said hydraulic pump and/or at least one clutch;
the processing means being configured to control the hydraulic pump and the switching means as a function of a position of an accelerator lever, wherein the processing means is configured to acquire an operating state of the vehicle, verifying whether the operating state of the vehicle is field and if the current gear turns out to be a higher gear of a predetermined group of field gears, and to inhibit the engagement of a gear higher than the current gear and to maintain unchanged a sign of a proportionality factor between an inclination of the accelerator lever and an inclination of a swash plate of the hydraulic pump beyond a first speed matching point with said higher gear.

8. A computer program comprising instructions for causing the processing unit of claim 7 to implement the method according to any of claims 1 - 6.

9. A computer readable medium having stored the program of claim 7.

10. Agricultural vehicle comprising a propulsion system comprising an internal combustion engine (E) operatively connected to a transmission (T), wherein the transmission comprises
- A hydrostat comprising a variable displacement hydraulic pump operatively connected to a fixed or variable displacement hydraulic motor, wherein the hydraulic pump is operatively driven in rotation by the internal combustion engine;
- An epicyclic gear train comprising
- -a first input operationally connected directly or indirectly to the internal combustion engine to receive the motion;
- -a second input operationally connected to the hydraulic pump of the hydrostat;
- -a first output arranged to rotate at least two toothed wheels defining as many first gears;
- -a second output arranged to rotate at least one toothed wheel defining at least a second intermediate gear with respect to said first two gears;
- -switching means for switching a motion transmission between said first and second gears, including synchronizers and/or clutches;
- Processing means (VCU) configured to control the hydraulic pump and the switching means as a function of a position of an accelerator lever;
the vehicle being **characterized in that** the processing means are in accordance with claim 8.

## Patentansprüche

1. Verfahren zum Steuern eines Getriebes (T) eines landwirtschaftlichen Fahrzeugs, wobei das landwirtschaftliche Fahrzeug ein Antriebssystem umfasst, das einen Verbrennungsmotor (E) umfasst, der wirkmäßig mit dem Getriebe (T) verbunden ist, wobei das Getriebe umfasst
- Einen Hydrostat, umfassend eine hydraulische Verstellpumpe, die wirkmäßig mit einem Hydraulikmotor mit fester oder variabler Verdrängung verbunden ist, wobei die Hydraulikpumpe wirkmäßig drehend durch den Verbrennungsmotor angetrieben wird;
- Ein Planetengetriebesystem, das mindestens einen ersten Anschluss und einen zweiten Ausgangsanschluss umfasst, wobei der erste Anschluss konfiguriert ist, zwei oder mehr Zahnräder, die ebenso viele Gänge einer ersten Gruppe definieren, drehend anzutreiben, und wobei der zweite Anschluss konfiguriert ist, ein oder mehrere Zahnräder, die ebenso viele Gänge einer zweiten Gruppe definieren, drehend anzutreiben, und wobei aufeinanderfolgende Gänge zu verschiedenen Gruppen zwischen der ersten und der zweiten Gruppe gehören;
- Mittel zum Durchführen eines Gangwechsels zwischen zwei aufeinanderfolgenden Gängen, einschließlich der Hydraulikpumpe und/oder mindestens einer Kupplung;
- Verarbeitungsmittel (VCU), das konfiguriert ist, um die Hydraulikpumpe und das Schaltmittel als eine Funktion einer Position eines Gashebels zu steuern, wobei das Verfahren nacheinander einschließt:
- (Schritt 1) Erfassung eines Betriebszustands des Fahrzeugs,
- (Ck1) Überprüfung eines Betriebszustands des Fahrzeugs, wodurch, wenn sie ausgibt, dass sich das Fahrzeug im Feldzustand befindet, das Verfahren **gekennzeichnet ist durch** dann
- (Ck2) Prüfen, ob der aktuelle Gang ein höherer Gang einer vorbestimmten Gruppe von Feldgängen ist, dann, falls ja
- (Schritt 2) Verhinderung des Einlegens eines höheren Gangs als des aktuellen Gangs und unverändertes Beibehalten eines Vorzeichens eines Proportionalitätsfaktors zwischen einer Neigung des Gashebels und einer Neigung einer Taumelscheibe der Hydraulikpumpe über einen ersten Geschwindigkeitsabstimmungspunkt mit dem höheren Gang hinaus.

2. Verfahren nach Anspruch 1, ferner umfassend einen Schritt des Ermöglichens des Eingriffs eines niedrigeren Gangs durch Ermöglichen eines Wechselns des Vorzeichens des Proportionalitätsfaktors zwischen der Neigung des Gashebels und der Neigung der Taumelscheibe der Hydraulikpumpe über einen zweiten Geschwindigkeitsabstimmungspunkt mit dem niedrigeren Gang hinaus.

3. Verfahren nach Anspruch 1 oder 2, wobei, wenn die Überprüfung (CK1) des Betriebszustands des Fahrzeugs ausgibt, dass der Betriebszustand "Straßen" ist, dann (Schritt 3) Zulassen des Einlegens eines höheren Gangs und Zulassen der Variation des Proportionalitätsvorzeichens am Geschwindigkeitsabstimmungspunkt.

4. Verfahren nach einem der vorstehenden Ansprüche 1 bis 3, ferner umfassend einen Schritt der automatischen Deaktivierung des "Feld"-Zustands des Fahrzeugs, der eine Feldbetriebsbedingung anzeigt, als Reaktion
- auf ein Signal, das repräsentativ für die Deaktivierung ist, das von einer Mensch-Maschine-Schnittstellenvorrichtung erzeugt wird, und gleichzeitig
- auf ein Signal, das repräsentativ für eine Betätigung eines Kupplungspedals ist.

5. Verfahren nach Anspruch 4, wobei das Verfahren infolge der Deaktivierung die folgenden Schritte nacheinander umfasst:
- Kupplungsöffnung,
- Variation der Neigung der Taumelscheibe bis zu dem Geschwindigkeitsabstimmungspunkt mit dem Gang unmittelbar höher als der aktuelle Gang,
- Eingriff in den unmittelbar höheren Gang und
- Schließen der Kupplung.

6. Verfahren nach einem der vorstehenden Ansprüche 1 bis 5, wobei der Betriebszustand des Fahrzeugs, der den Feldzustand anzeigt, durch ein Signal verursacht wird, das von einer Mensch/Maschine-Schnittstelle erzeugt wird oder von einem Verarbeitungsmittel als Folge der positiven Überprüfung der Tatsache erzeugt wird, dass sich das Fahrzeug in einem Geschwindigkeitsintervall bewegt, das einem Intervall von Neigungen der Taumelscheibe entspricht, einschließlich eines Geschwindigkeitsabstimmungspunkts mit einem höheren Gang.

7. Fahrzeugverarbeitungsmittel (VCU) für ein landwirtschaftliches Fahrzeug (AV), umfassend ein Antriebssystem, das einen Verbrennungsmotor (E) umfasst, der wirkmäßig mit einem Getriebe (T) verbunden ist, wobei das Getriebe umfasst
- Einen Hydrostat, umfassend eine hydraulische Verstellpumpe, die wirkmäßig mit einem Hydraulikmotor mit fester oder variabler Verdrängung verbunden ist, wobei die Hydraulikpumpe wirkmäßig drehend durch den Verbrennungsmotor angetrieben wird;
- Ein Planetengetriebesystem, das mindestens einen ersten Anschluss und einen zweiten Ausgangsanschluss umfasst, wobei der erste Anschluss konfiguriert ist, zwei oder mehr Zahnräder, die ebenso viele Gänge einer ersten Gruppe definieren, drehend anzutreiben, und wobei der zweite Anschluss konfiguriert ist, ein oder mehrere Zahnräder, die ebenso viele Gänge einer zweiten Gruppe definieren, drehend anzutreiben, und wobei aufeinanderfolgende Gänge zu verschiedenen Gruppen zwischen der ersten und der zweiten Gruppe gehören;
- Mittel zum Durchführen eines Gangwechsels zwischen zwei aufeinanderfolgenden Gängen, einschließlich der Hydraulikpumpe und/oder mindestens einer Kupplung;
wobei das Verarbeitungsmittel konfiguriert ist, um die Hydraulikpumpe und das Schaltmittel als Funktion einer Position eines Gashebels zu steuern, wobei das Verarbeitungsmittel konfiguriert ist, um einen Betriebszustand des Fahrzeugs zu erfassen, zu überprüfen, ob der Betriebszustand des Fahrzeugs Feld ist und, falls sich der aktuelle Gang als ein höherer Gang einer vorbestimmten Gruppe von Feldgängen herausstellt, und das Einlegen eines Gangs höher als der aktuelle Gang zu verhindern und ein Vorzeichen eines Proportionalitätsfaktors zwischen einer Neigung des Gashebels und einer Neigung einer Taumelscheibe der Hydraulikpumpe über einen ersten Geschwindigkeitsabstimmungspunkt mit dem höheren Gang unverändert beizubehalten.

8. Computerprogramm, das Anweisungen umfasst, um die Verarbeitungseinheit nach Anspruch 7 zu veranlassen, das Verfahren nach einem der Ansprüche 1 bis 6 zu implementieren.

9. Computerlesbares Medium, auf dem das Programm nach Anspruch 7 gespeichert ist.

10. Landwirtschaftliches Fahrzeug, das ein Antriebssystem umfasst, das einen Verbrennungsmotor (E) umfasst, der wirkmäßig mit einem Getriebe (T) verbunden ist, wobei das Getriebe umfasst
- Einen Hydrostat, umfassend eine hydraulische Verstellpumpe, die wirkmäßig mit einem Hydraulikmotor mit fester oder variabler Verdrängung verbunden ist, wobei die Hydraulikpumpe wirkmäßig drehend durch den Verbrennungsmotor angetrieben wird;
- Ein Planetengetriebe, umfassend
- einen ersten Eingang, der wirkmäßig direkt oder indirekt mit dem Verbrennungsmotor verbunden ist, um die Bewegung zu empfangen;
- einen zweiten Eingang, der wirkmäßig mit der Hydraulikpumpe des Hydrostats verbunden ist;
- einen ersten Ausgang, der angeordnet ist, um mindestens zwei Zahnräder zu drehen, die ebenso viele erste Gänge definieren;
- einen zweiten Ausgang, der angeordnet ist, um mindestens ein Zahnrad zu drehen, das mindestens einen zweiten Zwischengang in Bezug auf die ersten beiden Gänge definiert;
- Schaltmittel zum Schalten einer Bewegungsübertragung zwischen dem ersten und zweiten Gang, einschließlich Synchronisierern und/oder Kupplungen;
- Verarbeitungsmittel (VCU), das konfiguriert ist, um die Hydraulikpumpe und das Schaltmittel als Funktion einer Position eines Gashebels zu steuern;
wobei das Fahrzeug **dadurch gekennzeichnet ist, dass** das Verarbeitungsmittel Anspruch 8 entspricht.

## Revendications

1. Procédé de commande d'une transmission (T) d'un véhicule agricole, dans lequel le véhicule agricole comprend un système de propulsion comprenant un moteur à combustion interne (E) relié de manière fonctionnelle à la transmission (T), dans lequel la transmission comprend
- un hydrostat comprenant une pompe hydraulique volumétrique variable reliée de manière fonctionnelle à un moteur hydraulique volumétrique fixe ou variable, dans lequel la pompe hydraulique est entraînée de manière fonctionnelle en rotation par le moteur à combustion interne ;
- un système de réducteur épicycloïdal comprenant au moins un premier orifice et un second orifice de sortie, dans lequel le premier orifice est conçu pour entraîner en rotation deux roues dentées ou plus définissant autant de rapports d'un premier groupe et dans lequel le second orifice est conçu pour entraîner en rotation une ou plusieurs roues dentées définissant autant de rapports d'un second groupe, et dans lequel les rapports consécutifs appartiennent à des groupes différents entre lesdits premier et second groupes ;
- un moyen pour effectuer un changement de rapport entre deux rapports consécutifs, y compris ladite pompe hydraulique et/ou au moins un embrayage ;
- Un moyen de traitement (VCU) configuré pour commander la pompe hydraulique et le moyen de commutation en fonction d'une position d'un levier d'accélérateur,
le procédé comportant successivement :
- (Étape 1) Acquisition d'un état de fonctionnement du véhicule,
- (Ck1) Vérification d'un état de fonctionnement du véhicule, moyennant quoi, lorsqu'il indique que le véhicule est en état de champ, le procédé est **caractérisé par**
- (Ck2) le fait de vérifier si le rapport actuel est un rapport supérieur d'un groupe prédéterminé de rapports de champ, puis, si c'est le cas
- (Étape 2) Le fait d'empêcher un enclenchement d'un rapport supérieur au rapport actuel et le maintien inchangé d'un signe d'un facteur de proportionnalité entre une inclinaison du levier d'accélérateur et une inclinaison d'un plateau oscillant de la pompe hydraulique au-delà d'un premier point d'adaptation de vitesse avec ledit rapport supérieur.

2. Procédé selon la revendication 1, comprenant en outre une étape consistant à permettre l'enclenchement d'un rapport inférieur en permettant une commutation du signe du facteur de proportionnalité entre l'inclinaison du levier d'accélérateur et l'inclinaison du plateau oscillant de pompe hydraulique sur un second point d'adaptation de vitesse avec ledit rapport inférieur.

3. Procédé selon la revendication 1 ou 2, dans lequel, lorsque ladite vérification (CK1) de l'état de fonctionnement du véhicule, renvoie que l'état de fonctionnement est « routes », alors, (Étape 3) le fait de permettre le déclenchement d'un rapport supérieur et le fait de permettre la variation du signe de proportionnalité au point d'adaptation de vitesse.

4. Procédé selon l'une quelconque des revendications précédentes 1 à 3, comprenant en outre une étape consistant à désactiver automatiquement ledit état « champ » du véhicule indiquant une condition de fonctionnement sur champ en réponse
- à un signal représentatif de ladite désactivation générée par un dispositif d'interface homme-machine et simultanément
- à un signal représentant un enfoncement d'une pédale d'embrayage.

5. Procédé selon la revendication 4, dans lequel, en conséquence de ladite désactivation, le procédé comprend successivement les étapes suivantes :
- ouverture d'embrayage,
- variation de l'inclinaison du plateau oscillant jusqu'au point d'adaptation de vitesse avec le rapport immédiatement supérieur au rapport actuel,
- enclenchement du rapport immédiatement supérieur et
- fermeture de l'embrayage.

6. Procédé selon l'une quelconque des revendications précédentes 1 à 5, dans lequel ledit état de fonctionnement du véhicule indiquant la condition de champ est amené par un signal généré par une interface homme/machine ou généré par un moyen de traitement en conséquence de la vérification positive du fait que le véhicule se déplace dans un intervalle de vitesse correspondant à un intervalle d'inclinaisons du plateau oscillant comportant un point d'adaptation de vitesse avec un rapport supérieur.

7. Moyen de traitement de véhicule (VCU), pour un véhicule agricole (AV) comprenant un système de propulsion comprenant un moteur à combustion interne (E) relié de manière fonctionnelle à une transmission (T), dans lequel la transmission comprend
- un hydrostat comprenant une pompe hydraulique volumétrique variable reliée de manière fonctionnelle à un moteur hydraulique volumétrique fixe ou variable, dans lequel la pompe hydraulique est entraînée de manière fonctionnelle en rotation par le moteur à combustion interne ;
- Un système de réducteur épicycloïdal comprenant au moins un premier orifice et un second orifice de sortie, dans lequel le premier orifice est conçu pour entraîner en rotation deux roues dentées ou plus définissant autant de rapports d'un premier groupe et dans lequel le second orifice est conçu pour entraîner en rotation une ou plusieurs roues dentées définissant autant de rapports d'un second groupe, et dans lequel les rapports consécutifs appartiennent à des groupes différents entre lesdits premier et second groupes ;
- un moyen pour effectuer un changement de rapport entre deux rapports consécutifs, y compris ladite pompe hydraulique et/ou au moins un embrayage ;
le moyen de traitement étant configuré pour commander la pompe hydraulique et le moyen de commutation en fonction d'une position d'un levier d'accélérateur, dans lequel le moyen de traitement est configuré pour acquérir un état de fonctionnement du véhicule, pour vérifier si l'état de fonctionnement du véhicule est de champ et si le rapport actuel s'avère être un rapport supérieur d'un groupe prédéterminé de rapports de champ, et pour empêcher l'enclenchement d'un rapport supérieur au rapport actuel et pour maintenir inchangé un signe d'un facteur de proportionnalité entre une inclinaison du levier d'accélérateur et une inclinaison d'un plateau oscillant de la pompe hydraulique au-delà d'un premier point d'adaptation de vitesse avec ledit rapport supérieur.

8. Programme d'ordinateur comprenant des instructions permettant d'amener l'unité de traitement selon la revendication 7 à mettre en œuvre le procédé selon l'une quelconque des revendications 1 à 6.

9. Support lisible par ordinateur sur lequel est stocké le programme selon la revendication 7.

10. Véhicule agricole comprenant un système de propulsion comprenant un moteur à combustion interne (E) relié de manière fonctionnelle à une transmission (T), dans lequel la transmission comprend
- un hydrostat comprenant une pompe hydraulique volumétrique variable reliée de manière fonctionnelle à un moteur hydraulique volumétrique fixe ou variable, dans lequel la pompe hydraulique est entraînée de manière fonctionnelle en rotation par le moteur à combustion interne ;
- Un train épicycloïdal comprenant
- une première entrée reliée fonctionnellement directement ou indirectement au moteur à combustion interne pour recevoir le mouvement ;
- une seconde entrée reliée fonctionnellement à la pompe hydraulique de l'hydrostat ;
- une première sortie agencée pour mettre en rotation au moins deux roues dentées définissant autant de premiers rapports ;
- une seconde sortie agencée pour mettre en rotation au moins une roue dentée définissant au moins un second rapport intermédiaire par rapport auxdits deux premiers rapports ;
- un moyen de commutation pour commuter une transmission de mouvement entre lesdits premier et second rapports, y compris des synchroniseurs et/ou des embrayages ;
- Un moyen de traitement (VCU) configuré pour commander la pompe hydraulique et le moyen de commutation en fonction d'une position d'un levier d'accélérateur ;
le véhicule étant **caractérisé en ce que** le moyen de traitement est conforme à la revendication 8.
